# EUROPÄISCHE PATENTSCHRIFT

(11) **EP 2 108 870 B1**
(45) Veröffentlichungstag und Bekanntmachung des Hinweises auf die Patenterteilung: **24.10.2012**
(21) Anmeldenummer: 09157160.4
(22) Anmeldetag: 02.04.2009
(51) Int. Cl.: F16K 37/00

(54) **Ventil mit Zustandsanzeige**
Valve with status display
Soupape dotée d'un affichage d'état

(30) Priorität: 11.04.2008 DE 102008018600
(43) Veröffentlichungstag der Anmeldung: 14.10.2009
(73) Patentinhaber: Klotsche, Harald, 61273 Wehrheim (DE)
(72) Erfinder: Klotsche, Harald, 61273 Wehrheim (DE)
(74) Vertreter: Staudt, Armin Walter

(56) Entgegenhaltungen:
- EP-A- 1 808 627
- DE-A1- 4 309 753
- DE-A1- 19 744 047
- DE-A1-102007 019 396
- JP-A- 10 122 422
- JP-U- 1 087 386
- JP-U- 1 136 781
- JP-U- 8 001 382

## Beschreibung

Die Erfindung betrifft ein Absperrventil mit Zustandsanzeige, mit einem um eine Drehachse drehbaren Betätigungselement mit Sichtfenster auf einer Oberseite desselben, durch dessen Drehbetätigung ein Ventil zwischen einer Offen- und einer Geschlossenstellung bewegbar ist, und das mit einer Zustandsanzeige zur Anzeige der Ventilstellung in Wirkverbindung steht, wobei die Zustandsanzeige ein um die Drehachse drehbar gelagertes Schleppelement umfasst, das mit dem Betätigungselement so zusammenwirkt, dass durch das Sichtfenster eine Offenmarkierung für die Offenstellung oder eine Geschlossenmarkierung für die Geschlossenstellung des Ventils erkennbar ist.

### Stand der Technik

Hochwertige Absperrventile sind mit einer Zustandsanzeige versehen, mit der die aktuelle Betriebsstellung des Ventils optisch signalisiert wird. Bei dem Betätigungselement handelt es sich beispielsweise um eine Kurbel, einen Knebel, einen Hebel oder um ein Handrad, häufig umgeben von einer Kappe.

Auf der Oberseite des Handrades befindet sich ein Fensterausschnitt, durch den man in das Handradinnere auf einen durch Reibung oder Klemmung verdrehgehemmten Anzeigering blicken kann, auf dem farbliche Markierungen, wie etwa rot für "geschlossen" oder grün für "offen" aufgebracht sind.

In geschlossener Stellung sieht der Bediener in der Draufsicht auf das Handrad die rote Markierung für "geschlossen". Wird nun das Handrad verdreht, so ändert das Fenster im Handrad seine Position relativ zum darunter liegenden Anzeigering da dieser sich wegen Klemmung nicht bewegen kann. Das Fenster fährt nun über einen Übergangsbereich zwischen der roten Markierung und der grünen Markierung, bis nur noch die grüne Markierung für "offen" zu sehen ist. Dies bleibt unverändert bis zum Erreichen der Endstellung des Handrades.

In einem Übergangsbereich wird optisch ein Zustand dargestellt, der weder eindeutig geöffnet noch eindeutig geschlossen zeigt. Die optischen Signale für beide Zustände sind in diesem Bereich gleichzeitig sichtbar.

Ist die Endstellung nach weniger als 360° Verdrehwinkel (minus Fensterbreite) erreicht, so ist die Darstellung des Öffnungszustandes eindeutig. Beim Zurückdrehen wird erst wieder der grüne Bereich durchlaufen, hiernach folgt der Übergangsbereich zu rot und wenn das Ventil geschlossen ist, kann man im Fenster ausschließlich die rote Markierung sehen.

Ist die Endstellung jedoch erst nach mehr als 360° Verdrehwinkel (abzüglich der Fensterbreite) erreicht, so wird entweder der rote Bereich erneut (oder mehrmals) durchlaufen, oder am Handrad ist ein Mitnehmer angebracht, der den Anzeigering bis zum Erreichen der Endstellung gegen die Klemm- oder Reibkraft mitschleppt, bevor die rote Markierung erneut erreicht wird.

Bei der zuerst genannten Ausgestaltung ist die Mangelhaftigkeit der Anzeige offenkundig: Trotz geöffnetem Ventil wird der rote Bereich mit dem Sinngehalt "geschlossen" durchlaufen, was zu Fehlinterpretationen führen kann und sicherheitstechnisch als gefährlich einzustufen ist.

Bei der als zweites genannten Ausgestaltung mit Schleppmechanismus für einen Anzeigering tritt die Mangelhaftigkeit bei der Anzeige des Öffnungszustandes des Ventils erst bei der Schließbewegung auf: Ein Absperrventil dieser Art ist beispielsweise aus der DE 43 09 753 A1 bekannt. Bei dem dort vorgeschlagenen Absperrventil, wie etwa einem Durchgangsventil, Eckventil oder Flaschenventil, ist ein drehbares Handrad zum Bewegen des Ventils zwischen seiner Offen- und seiner Schließstellung vorgesehen. Das Handrad ist mit einem Mitnehmer versehen, der beim Drehen in einen Mitnahmenocken eines Anzeigerings eingreift, so dass dieser gegen eine Reibungskraft mitgeschleift wird, bis die Endstellung des Ventils erreicht ist.

Bei der Schließbewegung löst sich der Mitnehmer vom Mitnahmenocken des Anzeigerings und durchläuft erst den gesamten grünen Bereich, dann den Übergangsbereich bis nach einer vollen Umdrehung am Ende des roten Bereiches wieder an den Mitnahmenocken stößt und dann den Anzeigering solange mit Signalgebung "rot" mitschleppt, bis das Ventil tatsächlich geschlossen ist. Optisch wird jedoch schon bei einer vollen Umdrehung des Handrades abzüglich der Fensterbreite der geschlossene Zustand ("rot") des Ventils angezeigt, also bereits bevor das Ventil tatsächlich geschlossen ist.

In beiden Fällen kann es zu Gefährdungen und Unfällen kommen, wenn beispielsweise ein brennbares oder giftiges Gas aus einer nicht ordnungsgemäß verschlossenen Druckflasche entweichen kann.

Die JP 10-122422 A zeigt ein Absperrventil mit einem Handrad und zwei Anzeigeringen, die den Schriftzug "OPEN" beziehungsweise den Schriftzug "SHUT", tragen und die je nach Ventilstellung durch ein Sichtfenster im Handrad ablesbar sind. Beim erstmaligen Drehen des Handrades in Öffnungsrichtung wird der Offen-Anzeigering bis zur endgültigen Offenstellung mitgedreht, und umgekehrt, wird beim Drehen des Handrades in Schließrichtung der Geschlossen-Anzeigering bis zur endgültigen Schließstellung mitgenommen. Auf diese Weise werden die Anzeigeringe korrekt auf die Winkelpositionen für Offenstellung und Geschlossenstellung des Ventils eingerichtet. Die Winkelpositionen sind auch weiterhin in die eine Richtung veränderbar, wenn sich der Anschlag für die Ventil-Geschlossenstellung oder für die Ventil-Offenstellung im Laufe der Zeit ändern sollte.

Die dazu eingesetzte Mechanik besteht aus einem mit dem Handrad drehenden Zapfen, der mit Anschlägen der Anzeigeringe so zusammenwirkt, dass er an dem Anschlag anschlägt und beim Weiterdrehen des Handrades in dieselbe Richtung den betreffenden Anzeigering weiterschiebt.

### Technische Aufgabe

Der Erfindung liegt die Aufgabe zugrunde, ein betriebssicheres Absperrventil mit verlässlicher und eindeutiger Zustandsanzeige zu schaffen.

Diese Aufgabe wird ausgehend von einem Absperrventil der eingangs genannten Gattung erfindungsgemäß dadurch gelöst, dass das Schleppelement die Offenmarkierung aufweist und in einer Ebene - in Blickrichtung durch das Sichtfenster gesehen - vor der Geschlossenmarkierung drehbar ist, wobei das Schleppelement und das Betätigungselement über eine lösbare Verbindung aus Mitnehmer und damit korrespondierender Ausnehmung derart zusammenwirken, dass das Schleppelement beim Öffnen und Schließen des Ventils mit dem Betätigungselement reversierend über die Geschlossenmarkierung und von dort wieder in seine Ausgangsstellung geschleppt wird, so dass das Schleppelement bei Ventil-Offenstellung die Sicht durch das Sichtfenster auf die Geschlossenmarkierung durch Abdeckung verhindert.

Die Zustandsanzeige des erfindungsgemäßen Absperrventils umfasst drei funktionale Ebenen, die - von oben nach unten gesehen - durch das Sichtfenster, das Schleppelement und durch die Geschlossenmarkierung gekennzeichnet sind. In der oberen Ebene ist das Sichtfenster vorgesehen, das sich mit dem Betätigungselement dreht. Die mittlere Ebene ist durch das Schleppelement mit der Offenmarkierung bestimmt, das ebenfalls drehbar gelagert ist. In der unteren Ebene befindet sich die Geschlossenmarkierung, die durch das Schleppelement entweder überdeckt oder freigegeben wird. Die radialen Abstände zur Drehachse sind so, dass Sichtfenster, Offenmarkierung des Schleppelements und Geschlossenmarkierung übereinander zu liegen kommen können.

Ein wesentliches Element des erfindungsgemäßen Absperrventils ist das um die Drehachse verdrehbare Schleppelement, das über die Geschlossenmarkierung bewegbar ist und diese dadurch abdeckt. Diese Abdeckung geschieht dann, wenn das Ventil zwar offen ist, aber gleichzeitig das Sichtfenster infolge der Drehbewegung des Betätigungselements über der Geschlossenmarkierung zu liegen kommt - diese also an und für sich sichtbar wäre und dann eine falsche Stellungsanzeige, nämlich geschlossen - signalisieren würde. Stattdessen ist in diesem Status durch das Sichtfenster das abdeckende Schleppelement sichtbar, das auf seiner Oberseite die Offenmarkierung trägt und somit die tatsächliche Offenstellung des Ventils richtig signalisiert. Das Schleppelement ist sinnvollerweise mindestens so groß wie der über das Sichtfenster sichtbare Teil der Geschlossenmarkierung.

Diese Funktion wird durch die Anordnung des Schleppelements - in Blickrichtung gesehen - vor der Geschlossenmarkierung, durch seine Verdrehbarkeit um die Drehachse, sowie durch das Zusammenspiel mit dem Betätigungselement erreicht, indem das Schleppelement beim Öffnen und Schließen des Ventils mit dem Betätigungselement reversierend über die Geschlossenmarkierung und von dort wieder in seine Ausgangsstellung geschleppt wird.

Beim Drehen des Betätigungselementes in Öffnungsrichtung verschwindet die Geschlossenmarkierung aus dem Sichtfenster und eine Offenmarkierung wird erkennbar. Bei einem ersten vorgegebenen Verdrehwinkel (im Folgenden als "vorderer Eingriffswinkel" bezeichnet) kommt es mittelbar oder unmittelbar zu einem Eingriff zwischen Betätigungselement und Schleppelement, so dass dieses beim weiteren Verdrehen mitgeschleppt und mitgedreht wird, wobei die Offenmarkierung des Schleppelements im Sichtfenster sichtbar ist. Das Schleppelement wird beim Weiterdrehen über einen Verdrehwinkel (der 360 Grad minus Winkelbereich der Geschlossenmarkierung beträgt) hinaus über die Geschlossenmarkierung gezogen, so dass diese unsichtbar bleibt. Das Schleppelement ist somit mindestens so groß wie die Geschlossenmarkierung.

Beim Zurückdrehen des Betätigungselements in Geschlossenrichtung verdeckt das Schleppelement wieder (oder immer noch) die Geschlossenmarkierung und zeigt somit "Offen" an. Beim weiteren Verdrehen des Betätigungselements in Schließrichtung wird das Schleppelement wieder von seiner Stellung vor der Geschlossenmarkierung weggeschleppt und gelangt schließlich beim vorderen Eingriffswinkel wieder außer Eingriff zum Betätigungselement, so dass beim weiteren Zudrehen des Betätigungselementes allmählich die Geschlossenmarkierung im Sichtfenster erscheint und bei vollständigem Schließen des Betätigungselementes im Sichtfenster allein sichtbar ist.

Das Schleppelement ist somit geeignet, die Geschlossenmarkierung abzudecken und im Sichtfenster statt dessen seine eigene Offenmarkierung anzuzeigen, solange das Betätigungselement die Geschlossenstellung nicht erreicht hat. Dadurch werden Ablesefehler vermieden und es wird ein Absperrventil mit verlässlicher Zustandsanzeige erreicht.

Das Schleppelement und das Betätigungselement wirken über einen Mitnehmer und eine damit korrespondierende Ausnehmung zusammen. Der Mitnehmer ist beispielsweise als Zapfen, Kugel oder Stift am Oberteil des Betätigungselements ausgebildet, der in eine entsprechende Ausnehmung im Schleppelement hineinragt. Diese mechanische Rastverbindung erlaubt es einerseits, das Betätigungselement und das Schleppelement gemeinsam um die Drehachse zu drehen und sie ist auch andererseits zu lösen, wenn das Schleppelement an einem Anschlag anliegt, indem der Mitnehmer aus der Ausnehmung herausgedreht wird.

In einer bevorzugten Ausführungsform des erfindungsgemäßen Absperrventils ist vorgesehen, dass das Schleppelement zwischen einem vorderen Anschlag und einem hinteren Anschlag unter Einwirkung des Betätigungselements verdrehbar ist.

Der Verdrehwinkel des Schleppelements wird durch die Lage der Anschläge bestimmt. Zwischen den Anschlägen ist das Schleppelement im Eingriff mit dem Betätigungselement und wird von diesem mitgeschleppt und dabei reversierend hin und herbewegt. Im Rahmen dieser reversierenden Bewegung ist durch das Sichtfenster nur die Offenmarkierung des Schleppelements sichtbar, auch wenn dieses über die Geschlossenmarkierung gezogen ist. Die für diese Abdeckung notwendige Verdrehung definiert den minimalen Verdrehwinkel des Schleppelements zwischen dem vorderen und dem hinteren Anschlag. Mit anderen Worten, der Verdrehwinkel zwischen den Anschlägen muss mindestens so groß sein, dass der im Sichtfenster sichtbare Teil der Geschlossenmarkierung vollständig abgedeckt werden kann. Vor dem vorderen Anschlag und nach dem hinteren Anschlag ist das Schleppelement außer Eingriff zum Betätigungselement und kann nicht weiter verdreht werden (das Betätigungselement kann jedoch auch dann noch weiter verdreht werden, und zwar bis zu einem Verdrehwinkel, an dem es zu einem erneuten Eingriff zum Schleppelement kommen würde).

Um einen möglichst großen Verdrehwinkel des Ventils zuzulassen, wird ein möglichst großer Verdrehwinkel des Schleppelements zwischen den Anschlägen angestrebt. Im Idealfall sind der vordere Anschlag und der hintere Anschlag daher auf einen Bereich oder einen Punkt zusammengezogen, an dem das Schleppelement links und rechts anschlagen kann, so dass sich ein Verdrehwinkel zwischen den Anschlägen bis nahe an 360 Grad ergeben kann. Vorzugsweise beträgt der Verdrehwinkel zwischen vorderem und hinterem Anschlag mindestens 270 Grad.

Aus den obigen Erläuterungen ergibt sich, dass der minimale Verdrehwinkel zwischen vorderem und hinterem Anschlag mindestens so groß ist wie ein Winkelbereich, der die Weite der Geschlossenmarkierung definiert. Die Geschlossenmarkierung ist beispielsweise als Kreisausschnitt eines Kreisrings ausgebildet, dessen Weite durch den hier als "Kreisausschnittswinkel" bezeichneten Winkel definiert wird (im Ausführungsbeispiel auch als "Winkel x" bezeichnet). Entscheidend ist dabei die tatsächliche Umfangs-Erstreckung der Markierung, nicht der durch das Sichtfenster sichtbare Ausschnitt. Das Sichtfenster hat vorteilhafterweise ebenfalls einen dem Winkel X entsprechenden Öffnungswinkel.

Bei einer bevorzugten Ausführungsform ist das Schleppelement mit einem die Offenmarkierung tragenden Kreisring versehen, der von einem Ausschnitt unterbrochen ist, der mindestens so groß ist wie der Kreisausschnittswinkel.

Dadurch wird gewährleistet, dass bei Geschlossenstellung ausschließlich die Geschlossenmarkierung im Sichtfenster erkennbar ist (und nicht auch ein Teil des Schleppelements). Der Ausschnitt in der Offenmarkierung des Schleppelements ermöglicht zwar die Sicht auf die gesamte Geschlossenmarkierung, wobei aber der tatsächliche sichtbare Ausschnitt durch die Größe des Sichtfensters bestimmt wird.

Es hat sich als günstig erwiesen, wenn der Kreisring einen mit einem Anschlagteil versehenen, hülsenförmigen Ansatz aufweist, der sich in die Innenbohrung eines Hilfszylinders erstreckt, in welcher der vordere Anschlag und der hintere Anschlag der Drehbewegung des Schleppelements ausgebildet sind.

Der hülsenförmige Ansatz des unterbrochenen Kreisrings dreht sich dabei frei in der Innenbohrung des Hilfszylinders, wobei das mindestens eine Anschlagteil mit dem dort vorgesehenen Anschlag (oder Anschlägen) zusammenwirkt. Durch das Zusammenspiel von Lage und Umfangserstreckung des Anschlags (oder der Anschläge) sowie der Lage und Umfangserstreckung des Anschlagteils wird der mögliche Verdrehwinkel des Schleppelements bestimmt. Eine Berührung mit der Innenwandung der Hilfszylinder-Innenbohrung ist jedoch nicht erwünscht.

Dabei hat es sich bewährt, wenn der Hilfszylinder auf seiner dem Schleppelement zugewandten Stirnseite die Geschlossenmarkierung trägt.

Die Geschlossenmarkierung ist mittelbar oder unmittelbar auf der dem Sichtfenster zugewandten, oberen Stirnseite des Hilfszylinders vorgesehen. Die Hilfszylinder-Stirnseite - oder ein darauf fixiertes, flächiges Markierungselement - bildet hierbei die eingangs erwähnte, unterste funktionale Ebene der Zustandsanzeige und wird im Folgenden auch als "Anzeigeelement" bezeichnet.

Eine konstruktiv besonders einfache Gestaltung der Geschlossenmarkierung ergibt sich, wenn diese als Kreisring mit einer Breite ausgebildet ist, die der Wandstärke des Hilfszylinders entspricht.

Die Markierung ist beispielsweise als farbige Fläche, als Bereiche unterschiedliche Musterung oder Schraffur, in Form von Symbolen oder einer Beschriftung ausgeführt.

Bei einer weiteren bevorzugten Ausführungsform des erfindungsgemäßen Absperrventils ist vorgesehen, dass das Schleppelement erst durch Drehen des Betätigungselements in Eingriff mit demselben gelangt, und dass Maßnahmen zur Erhöhung der Reibung vorgesehen sind, die einem Verdrehen des Schleppelements um die Drehachse ohne den Eingriff mit dem Betätigungselement entgegenwirken.

In Geschlossenstellung sind Schleppelement und Betätigungselement nicht im Eingriff miteinander. Beim Drehen des Betätigungselements in Öffnungsrichtung bleibt das Schleppelement in seiner Position und das Sichtfenster wird über die Offenmarkierung des Schleppelements gedreht. Frühestens dann, wenn im Sichtfenster nur noch Offenmarkierung zu sehen ist, wird das Schleppelement mit dem Betätigungselement mitgedreht. Um ein vorzeitiges Mitdrehen zu vermeiden, etwa infolge von Verunreinigungen zwischen Betätigungselement und Schleppelement, kann eine gewisse Fixierung des Schleppelements vorgesehen werden, die den Widerstand gegen ein Verdrehen um die Drehachse erhöht. Im Fall einer gleitenden Drehbewegung des Schleppelements über eine Gleitfläche genügt hierfür beispielsweise eine Ausbuchtung und eine korrespondierende Vertiefung in Schleppelement und Gleitfläche.

Das Betätigungselement weist vorzugsweise ein Oberteil auf, in dem das Sichtfenster ausgebildet ist, und das mit einem Zapfen versehen ist, der mit dem Ventil in Drehverbindung steht.

Das Sichtfenster ist somit so angeordnet, dass die Zustandsanzeige mit Blickrichtung parallel zur Drehachse erkennbar ist. In der Regel ist der untere Teil des Zapfens als Innenvierkant ausgebildet, der mit einem entsprechenden Oberteil des Ventils zusammenwirkt.

Um ein zuverlässiges Zusammenspiel von Mitnehmer und damit korrespondierender Ausnehmung zu gewährleisten, hat es sich als günstig erwiesen, wenn das Schleppelement mittels eines Druckelements gegen das Betätigungselement gepresst wird, wobei das Schleppelement und das Betätigungselement nur gegen die Anpresskraft des Druckelements außer Eingriff gebracht werden können Das Druckelement ist ein elastisches Element mit Federwirkung, im einfachsten Fall eine Blatt- oder Spiralfeder.

Weiterhin wird das Absperrventil vorzugsweise einer Rutschkupplung, Überschnappeinrichtung oder eine Sollbruchstelle versehen, so dass im Falle eines Versagens der Zustandsanzeige das Ventil geschlossen werden kann.

Hierdurch bleibt gewährleistet, dass - auch bei Fehlfunktion des Betätigungsmechanismus das Ventil unter Anwendung von Handgewalt noch geschlossen werden kann.

Um einen möglichst großen Verdrehwinkel des Absperrventils zuzulassen, sind die Winkelbereiche der Umfangserstreckungen von Sichtfenster, Geschlossenmarkierung und Anschlagteil vorteilhafterweise etwa gleich groß sind.

Ein guter Kompromiss zwischen großem Verdrehwinkel und Erkennbarkeit der Stellungsanzeige ergibt sich, wenn der Winkelbereich der Umfangserstreckungen zwischen 45 Grad und 135 Grad liegt.

### Ausführungsbeispiel

Nachfolgend wird die Erfindung anhand von Ausführungsbeispielen und einer Zeichnung näher erläutert. In der Zeichnung zeigt im Einzelnen
- **Figur 1**: eine Ausführungsform eines erfindungsgemäßen Absperrventils in einer Seitenansicht und als Schnittdarstellung,
- **Figur 2a**: das Handrad des Absperrventils von Figur 1 in einer Seitenansicht im Schnitt,
- **Figur 2b**: das Handrad in einer Draufsicht,
- **Figur 3a**: die Schleppscheibe des Absperrventils von Figur 1 in einer Seiten- ansicht im Schnitt,
- **Figur 3b**: die Schleppscheibe in einer Draufsicht,
- **Figur 4a**: zeigt einen Längsschnitt eines Anzeigeelements für ein Absperrventil gemäß der Erfindung,
- **Figur 4b**: zeigt das Anzeigeelements in einer Draufsicht
- **Figuren 5a, 5b**: ein Ablaufschema zur Erläuterung des Bewegungsablaufs der Bestandteile der Stellungsanzeige.

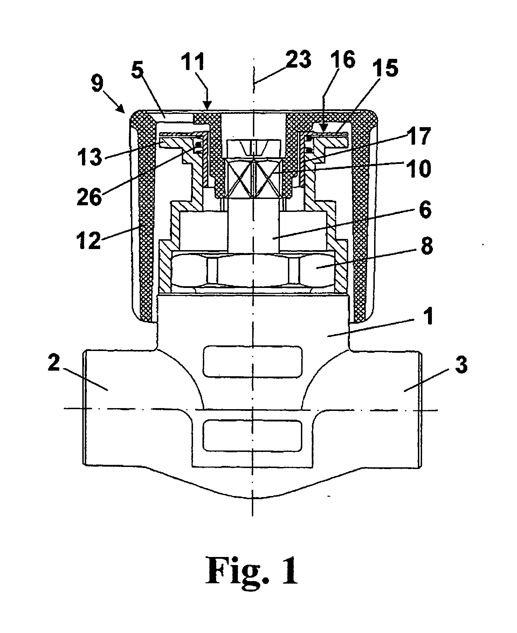

Die **Figur 1** zeigt eine bevorzugte Ausführungsform eines Gasabsperrventils mit Zustandsanzeige in Form eines Leitungsventils. Der Grundkörper 1 enthält in üblicher Weise zwischen einer Gaseinlassseite 2 und einer Gasauslassseite 3 einen Ventil mit Dichtelement und Ventilsitz, eine Absperrspindel 6 und eine Kopfschraube 8. Auf der Kopfschraube 8 ist über einen Außenvierkant 10 ein Handrad 9 verdrehfest verbunden. Das Handrad 9 weist eine Oberseite 11 mit Sichtfenster 5 und einen hülsenförmigen Mantelteil 12 auf.

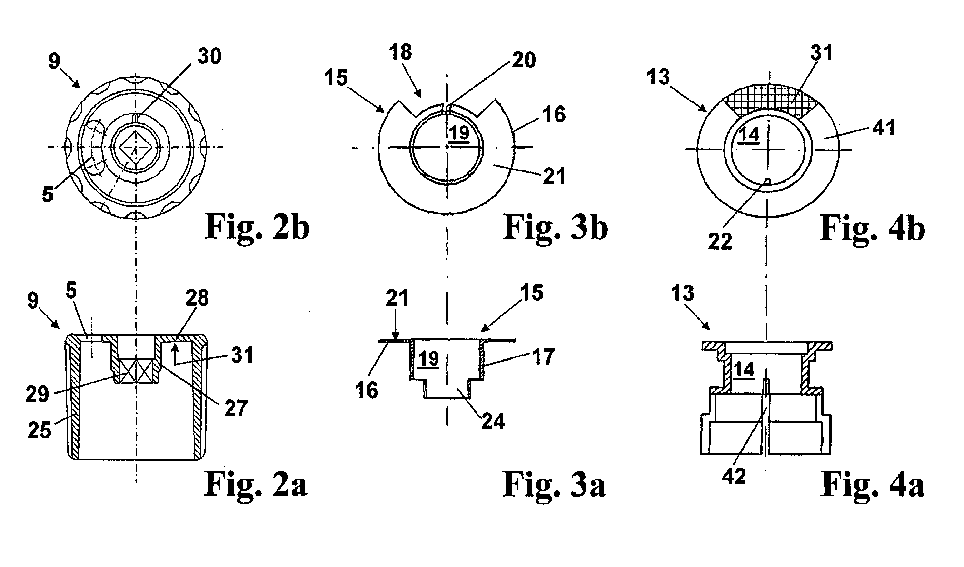

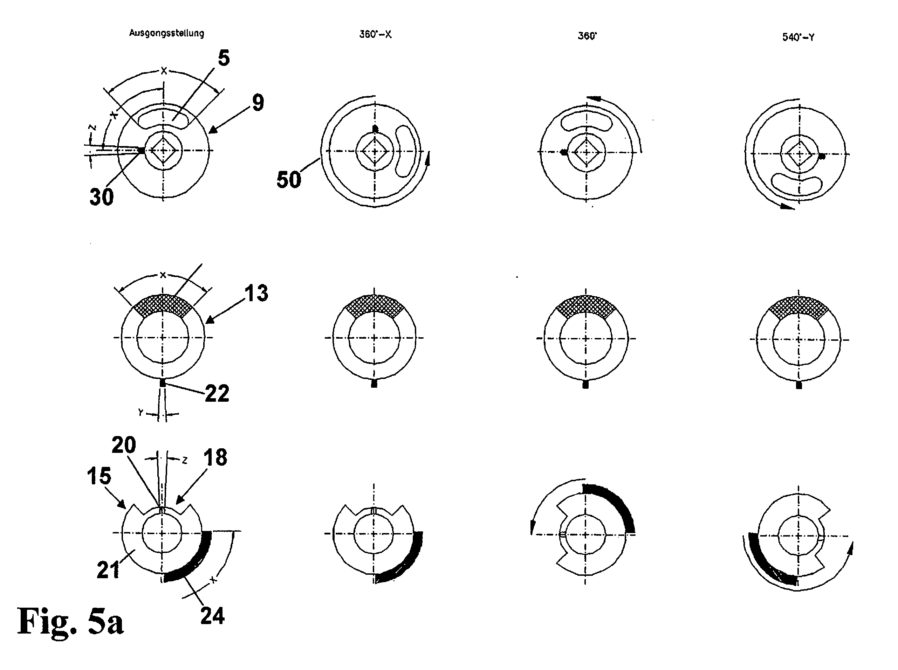

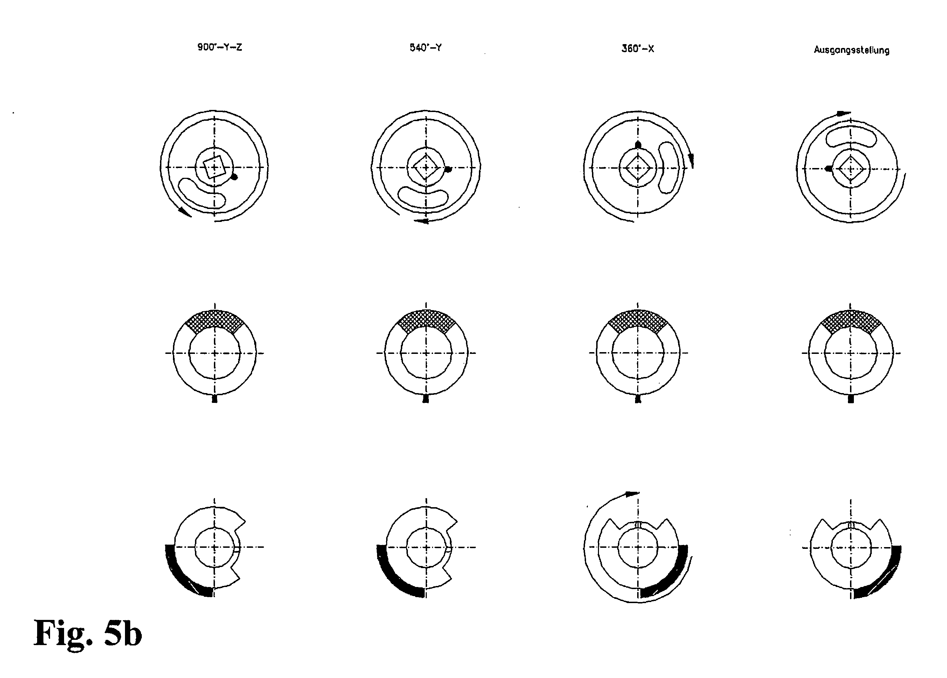

Innerhalb des Handrades 9 ist ein Anzeigeelement 13 mit stufig abgesetzter Innenbohrung 14 angeordnet, das auf der Kopfschraube 8 aufsitzt. Auf der oberen Stirnseite des Anzeigeelements 13 ist ein Kreisausschnitt rot markiert (Geschlossenmarkierung 31; siehe Fig. 4b und Fig. 5) und der daran unmittelbar im angrenzende Kreisausschnitt grün markiert. Die Farbe "Rot" kennzeichnet den Geschlossenzustand des Absperrventils, "Grün" den Offenzustand. Der rote Kreisausschnitt erstreckt sich über einen Winkelbereich von 90 Grad und der grüne Kreisausschnitt über einen Winkelbereich von 270 Grad.

Auf der oberen Stirnseite des Anzeigeelements 13 liegt eine Schleppscheibe 15 auf. Diese weist ein hülsenförmiges Unterteil 17 auf, das sich in die Innenbohrung 14 des Anzeigeelements 13 erstreckt, und an dessen Oberseite sich als wesentlicher Bestandteil des "Schleppelements" ein flanschförmiger Außenkragen 16 anschließt.

Die Schleppscheibe 15 ist in den **Figuren 3a und 3b** im Detail dargestellt. Der Außenkragen 16 ist nicht umlaufend, sondern von einer Aussparung 18 mit einem Kreisauschnittswinkel "X" von etwa 90 Grad unterbrochen. Ansonsten ist die Oberseite 21 des Kragens 16 grün markiert (=Offenmarkierung). An die Innenbohrung 19 angrenzend ist auf der Kragenoberseite 21 und mittig zur Aussparung 18 eine Kerbe 20 vorgesehen.

Das hülsenförmige Unterteil 17 weist einen nach unten weisenden Lappen 24 auf, der sich über einen Kreiswinkelbereich von 90 Grad erstreckt. Die Lage und Erstreckung des Lappens sind aus Figur 5 (dritte Reihe) ersichtlich. Dazu korrespondierend ist in der Innenbohrung 14 des Anzeigeelements 13 ein nach innen ragender Fortsatz 22 (siehe Figur 5, 2. Reihe) vorgesehen. Der Fortsatz 22 dient als Anschlag für den Lappen 24 der Schleppscheibe 15, und zwar beim Öffnen des Ventils als linksseitiger Anschlag und beim Schließen als rechtsseitiger Anschlag. Der Fortsatz 22 und der Lappen 24 sind zueinander so angeordnet und gestaltet, dass beim Verdrehen des Handrades 9 in Öffnungsrichtung (nach links, gegen den Uhrzeigersinn), der Anschlag nach einem Verdrehwinkel von 270 Grad erfolgt. Beim Zurückdrehen und rechtsseitigem Anschlag kommt der Ausschnitt 18 genau über dem rot markierten Kreisausschnitt des Anzeigeelements 13 zu liegen (dies entspricht der Ausgangsstellung), und beim linksseitigen Anschlag über dem grün markierten Kreisausschnitt des Anzeigeelements 13. Die Schleppscheibe 15 kann somit innerhalb der Innenbohrung 14 des Anzeigeelements 13 eine Drehung von 270 Grad um die Drehachse 23 ausführen.

Die Schleppscheibe 15 wird mittels einer Spiralfeder 26 nach oben, gegen die Oberseite 11 des Handrades 9 gedrückt. Details des Handrades 9 sind aus den **Figuren 2a und 2b** erkennbar. Ähnlich wie die Schleppscheibe 15 weist auch das Handrad 9 ein hülsenförmiges Innenteil 27 auf, an das sich die Oberseite 28 anschließt, und die in einen Außenmantel 25 übergeht. Die mit dem Innenvierkant 29 versehene Hülse 27 ist auf den Außenvierkant 10 des Ventils aufgesetzt, wie oben bereits beschrieben. Die Oberseite 28 ist mit einem Durchbruch versehen, der das Sichtfenster 5 bildet. Das Sichtfenster 5 erstreckt sich über einen Winkelbereich von etwa 90 Grad. Die Breite des Sichtfensters 5 (in radialer Richtung) entspricht etwa der Breite der Stirnseite des Anzeigeelements 13 und der Breite des Kragens 16 der Schleppscheibe 15, nämlich 5 mm.

In der Draufsicht von Fig. 2b, die die Mitte des Sichtfensters 5 bei einer Position von "9 Uhr" zeigt, ist in einer "12 Uhr" entsprechenden Position an das Handrad 9 ein Mitnehmer 30 in Form einer nach unten weisenden Erhebung angegossen, deren abgerundete Spitze von der Unterseite 31 etwa 1 mm herausragt. Die radiale Position des Mitnehmers 30 entspricht genau der radialen Position der Kerbe 20 der Schleppscheibe 15.

Details des Anzeigeelements 13 mit der stufig abgesetzten Innenbohrung 14 sind aus den **Figuren 4a und 4b** ersichtlich. Figur 4b zeigt eine Draufsicht auf das Anzeigeelement 13 und Figur 4a einen Längsschnitt desselben. Auf der oberen Stirnseite des Anzeigeelements 13 ist ein Kreisausschnitt rot markiert. Dabei handelt es sich um die Geschlossenmarkierung 31 der Stellungsanzeige. Der daran unmittelbar angrenzende Kreisausschnitt 41 ist grün markiert. Der rote Kreisausschnitt erstreckt sich über einen Winkelbereich von 90 Grad und der grüne Kreisausschnitt über einen Winkelbereich von 270 Grad.

In der Innenbohrung 14 ist ein nach innen ragender Fortsatz 22 vorgesehen, der als Anschlag für den nach unten ragenden Lappen 24 der drehenden Schleppscheibe 15 dient. In der Draufsicht von Fig. 4b, die die Mitte der Geschlossenmarkierung 31 bei einer Position von "12 Uhr" zeigt, ist der Fortsatz in einer "6 Uhr" entsprechenden Position vorgesehen. Im Gegensatz zu der in Fig. 1 gezeigten Ausführungsform weist das Anzeigeelement 13 von Fig. 4 das auf der Kopfschraube 8 aufsitzende Unterteil Einschlitzungen 42 auf, die die Anforderungen an die Passgenauigkeit verringern und einen verdrehfesten Sitz auf der Kopfschraube 8 gewährleisten.

Die Winkelbereiche der Umfangserstreckungen von Sichtfenster 5, Geschlossenmarkierung 31 und Lappen 24 der Schleppscheibe 24 sind im Idealfall gleich groß und liegen im Ausführungsbeispiel bei 90° (als Winkel "x" bezeichnet).

Im Folgenden wird die Funktionsweise des erfindungsgemäßen Absperrventils anhand des Ablaufschemas der **Figuren 5a** **und** **5b** und unter Bezugnahme auf die in den Figuren 1 bis 4 verwendeten Bezugsziffern schematisch näher erläutert. Die dargestellte Zustandseinrichtung ist für Absperrventile geeignet, bei denen der Verdrehwinkel des Handrades zwischen Geschlossen- und maximaler Offenstellung etwas weniger als 900 Grad beträgt (genauer 880 Grad).

In der obersten Reihe von Fig. 5a ist der Verdrehwinkel des Handrades 9 ausgehend von der Geschlossenstellung des Ventils (0 °) angegeben.

Die zweite Reihe zeigt die jeweilige Stellung des Sichtfensters 5, das sich über einen radialen Winkelbereich von 90 Grad erstreckt. In Geschlossenstellung ist in der "9-Uhr-Position" der Mitnehmer 30 erkennbar, der sich über einen Winkelbereich von etwa 5 Grad erstreckt. Die Mitten der Winkelbereiche von Sichtfenster 5 und Mitnehmer 30 schließen einen Winkel von 90 Grad ein.

Die dritte Reihe zeigt die Stellung der Geschlossenmarkierung 31 auf der Oberseite des Anzeigeelements 13. Da sich das Anzeigeelement 13 nicht um die Drehachse 23 dreht, ändert die Geschlossenmarkierung 31 ihre Position (im Wesentlichen) nicht. Die Geschlossenmarkierung erstreckt sich über einen Kreiswinkelbereich von 90 Grad, der Rest der Oberseite des Anzeigeelements 13 zeigt die "Offenmarkierung" (grüne Farbe). Der Geschlossenmarkierung 31 mittig gegenüberliegend ist der nach innen ragende Fortsatz 22 in der Innenbohrung des Anzeigeelements 13 dargestellt, der als Anschlag für die Schleppscheibe 15 dient.

Die vierte Reihe zeigt die Schleppscheibe 15 und die jeweilige Positionen der Aussparung 18, die ebenfalls einen Winkelbereich von 90 Grad einnimmt. Die Kerbe 20 auf der Oberseite der Schleppscheibe 15 ist mittig zur Aussparung 18 angebracht und erstreckt sich über einen Winkelbereich "z" von 10 Grad. Die radiale Erstreckung des Lappens 24 an der Unterseite Schleppscheibe 15 ist durch einen schwarzen markierten Bereich symbolisiert. Der Lappen erstreckt sich ebenfalls über einen Winkelbereich "x" von 90 Grad.

In der Ausgangsstellung (0°) liegt die Aussparung 18 genau über der Geschlossenmarkierung 31, so dass nur diese durch das Sichtfenster 5 zu sehen ist. Beim Drehen des Handrads 9 in Öffnungsrichtung (gegen den Uhrzeigersinn, wie anhand des Richtungspfeils 50 angezeigt) verschwindet zunächst die Geschlossenmarkierung 31 aus dem Sichtfenster 5 und die Offenmarkierung 21 (grüne Farbe) der ruhenden Schleppscheibe 15 wird erkennbar. Die Schleppscheibe 15 und das Handrad 9 sind bis zu einem Verdrehwinkel von 270 ° nicht im Eingriff miteinander.

Beim Verdrehwinkel von 270 ° (360 ° - x) rastet der Mitnehmer 30 des Handrades 9 in die Kerbe 20 der Schleppscheibe 15 ein, so dass beim weiteren Verdrehen des Handrades 9 die Schleppscheibe 15 mitgeschleppt und mitgedreht wird und dabei über die Geschlossenmarkierung 31 gezogen wird (360 °). Daher bleibt die Offenmarkierung 21 der Schleppscheibe 15 auch bei einem Verdrehwinkel von 360° im Sichtfenster 5 sichtbar, während die darunter liegende Geschlossenmarkierung 31 unsichtbar ist.

Bei einer weiteren Verdrehung um 180 Grad (540 °- y) schlägt der Lappen 24 der Schleppscheibe 15 linksseitig am Anschlag 22 des Anzeigeelements 13 an, so dass sich die Rastverbindung zwischen Schleppscheibe 15 und Handrad 9 beim Weiterdrehen des Handrades 9 löst.

Beim Weiterdrehen des Handrades 5 bleibt die Schleppscheibe 15 in ihrer Position, in der sie die Geschlossenmarkierung 31 überdeckt, so dass das Handrad 5 noch einmal um fast eine ganze Umdrehung weiter gedreht werden kann (genauer: um den Drehwinkel 360 ° - z), bevor der Mitnehmer 30 wieder in die bei der "3 Uhr-Position" liegende Kerbe 20 einrasten würde. Dies würde jedoch zu einer falschen Anzeige führen und darf bei dieser Ausführungsform des Stellungsanzeige nicht passieren, deren maximaler Verdrehwinkel 900°-y°-z° (im Ausführungsbeispiel = 880°) entspricht. Die Stellungsanzeige gemäß dem Ausführungsbeispiel ist hierfür geeignet.

Beim Zurückdrehen des Handrades 9 in Schließrichtung (- 360 °) liegt die Schleppscheibe 15 immer noch vor der Geschlossenmarkierung 31, so dass im Sichtfenster 5 weiterhin und richtigerweise "Offen" anzeigt wird. Bei der Position 540 °- y gelangt das Handrad 9 (der Mitnehmer 30) wieder in Eingriff mit der Schleppscheibe 15 (der Kerbe 20), so dass sich diese mit dem Handrad 9 mitdreht und beim weiteren Zudrehen im Sichtfenster 5 stets die Offenmarkierung 21 der Schleppscheibe 15 erkennbar ist.

Dabei wird dabei die Schleppscheibe 15 beim weiteren Zudrehen zusammen mit dem Handrad 9 wieder über die Geschlossenmarkierung 31 hinweg gezogen, so dass diese über das Sichtfenster 5 wiederum nicht sichtbar ist. Bei einem Verdrehwinkel von 270° (360° - x) schlägt der Lappen 24 der Schleppscheibe 15 rechtsseitig am Anschlag 22 des Anzeigeelements 13 an, so dass sich die Rastverbindung zwischen Schleppscheibe 15 und Handrad 9 beim Weiterdrehen des Handrades 9 wieder löst. Die Aussparung der Schleppscheibe 15 liegt nun wieder genau über der Geschlossenmarkierung 31, wie es der Ausgangsstellung entspricht.

Allerdings ist im Sichtfenster 5 noch die Offenmarkierung 21 der Schleppscheibe 15 sichtbar. Beim Weiterdrehen des Handrades 9 in Schließrichtung bleibt die Schleppscheibe 15 in ihrer Position (Ausgangsstellung), bis schließlich die Geschlossenmarkierung 31 des Anzeigeelements 13 erscheint und bei vollständigem Schließen im Sichtfenster 5 allein sichtbar ist.

Die oben beschriebene Zustandsanzeige ist auch für Absperrventile mit größerem Verdrehwinkel als 900°-y°-z° einsetzbar, wobei in diesen Fällen ein oder mehrere Verschiebe- und Abdeckringe eingesetzt werden, die übereinander aufgelegt werden, wie dies in der deutschen Patentanmeldung DE 102007019396 beschrieben ist.

Nach längerem Einsatz des Ventils können sich die Dichtungen setzen und verformen, insbesondere bei Verwendung von weichem Dichtungsmaterial. Dadurch kann sich die Geschlossenstellung des Ventils im Lauf der Zeit verändern, so dass das Handrad 9 zum vollständigen Schließen des Ventils weiter zu drehen ist als es die Geschlossenmarkierung 31 des Anzeigeelements 13 angibt.

Dieser Effekt kann durch eine Nachjustierung des Anzeigeelements 13 kompensiert werden. Dabei wird das fest aufsitzende Anzeigeelement 13 um seine Längsachse verdreht. Das Verdrehen kann mit Hilfe des Handrades 9 erfolgen, indem Anzeigeelement 13 und Handrad 9 temporär gekoppelt werden. Die Kopplung kann zum Beispiel dadurch erfolgen, dass der Außenmantel des Anzeigeelements 13 und der Außenmantel 25 des Handrads 9 mit Bohrungen versehen sind, die in der Ausgangsstellung (Geschlossenbereich im Sichtfenster vollständig sichtbar) in einer gemeinsamen Achse verlaufen. Durch die Bohrungen kann ein Stift eingesteckt werden, der beide Bauteile koppelt. Durch Drehen des Handrades 9 in die neue Geschlossenstellung des Ventils wird nun das Anzeigeelement 13 mitgedreht und dadurch die Geschlossenmarkierung 31 mit der Geschlossenstellung des Ventils in Übereinstimmung gebracht.

## Patentansprüche

1. Absperrventil mit Zustandsanzeige, mit einem um eine Drehachse (23) drehbaren Betätigungselement (9) mit Sichtfenster (5) auf einer Oberseite (11) desselben, durch dessen Drehbetätigung ein Ventil (6) zwischen einer Offen- und einer Geschlossenstellung bewegbar ist, und das mit einer Zustandsanzeige zur Anzeige der Ventilstellung in Wirkverbindung steht, wobei die Zustandsanzeige ein um die Drehachse (23) drehbar gelagertes Schleppelement (15) umfasst, das mit dem Betätigungselement (9) so zusammenwirkt, dass durch das Sichtfenster (5) eine Offenmarkierung (21) für die Offenstellung oder eine Geschlossenmarkierung für die Geschlossenstellung des Ventils (6) erkennbar ist, **dadurch gekennzeichnet, dass** das Schleppelement (15) die Offenmarkierung (21) aufweist und in einer Ebene - in Blickrichtung durch das Sichtfenster gesehen - vor der Geschlossenmarkierung (31) drehbar ist, wobei das Schleppelement (15) und das Betätigungselement (9) über eine lösbare Verbindung aus Mitnehmer (30) und damit korrespondierender Ausnehmung (20) derart zusammenwirken, dass das Schleppelement (15) beim Öffnen und Schließen des Ventils (6) mit dem Betätigungselement (9) reversierend über die Geschlossenmarkierung und von dort wieder in seine Ausgangsstellung geschleppt wird, so dass das Schleppelement (15) bei Ventil-Geschlossenstellung die Sicht durch das Sichtfenster (5) auf die Geschlossenmarkierung (31) freigibt, und bei Ventil-Offenstellung die Sicht durch das Sichtfenster (5) auf die Geschlossenmarkierung (31) durch Abdeckung verhindert.

2. Absperrventil nach Anspruch 1, **dadurch gekennzeichnet, dass** das Schleppelement (15) zwischen einem vorderen Anschlag (22) und einem hinteren Anschlag (22) unter Einwirkung des Betätigungselements (9) verdrehbar ist.

3. Absperrventil nach Anspruch 2, **dadurch gekennzeichnet, dass** der Verdrehwinkel zwischen vorderem und hinterem Anschlag (22) mindestens 270 Grad beträgt.

4. Absperrventil nach Anspruch 2 oder 3, **dadurch gekennzeichnet, dass** der Verdrehwinkel zwischen vorderem und hinterem Anschlag (22) mindestens so groß ist wie ein Kreisausschnittswinkel (x), der die Weite der Geschlossenmarkierung (31) definiert.

5. Absperrventil nach Anspruch 4, **dadurch gekennzeichnet, dass** das Schleppelement (15) mit einem die Offenmarkierung (21) tragenden Kreisring versehen ist, der von einem Ausschnitt (18) unterbrochen ist, der mindestens so groß ist wie der Kreisausschnittswinkel (x).

6. Absperrventil nach Anspruch 5, **dadurch gekennzeichnet, dass** der Kreisring einen mit einem Anschlagteil (24) versehenen, hülsenförmigen Ansatz (17) aufweist, der sich in die Innenbohrung (14) eines Hilfszylinders (13) erstreckt, in welcher der vordere Anschlag (22) und der hintere Anschlag (22) der Drehbewegung des Schleppelements (15) ausgebildet sind.

7. Absperrventil nach Anspruch 6, **dadurch gekennzeichnet, dass** der Hilfszylinder (13) auf seiner dem Schleppelement (15) zugewandten Stirnseite die Geschlossenmarkierung (31) trägt.

8. Absperrventil nach einem der vorhergehenden Ansprüche, **dadurch gekennzeichnet, dass** das Betätigungselement (9) ein Oberteil (28) aufweist, in dem das Sichtfenster (5) ausgebildet ist, und das mit einem Zapfen (27) versehen ist, der mit dem Ventil (6) in Drehverbindung steht.

9. Absperrventil nach Anspruch 1, **dadurch gekennzeichnet, dass** das Schleppelement (15) mittels eines Druckelements (26) gegen das Betätigungselement (9) gepresst wird und dass das Schleppelement (15) und das Betätigungselement (9) gegen die Anpresskraft des Druckelements (26) außer Eingriff gebracht werden können

10. Absperrventil nach einem der vorhergehenden Ansprüche, **dadurch gekennzeichnet, dass** die Zustandsanzeige so angeordnet ist, dass sie mit Blickrichtung parallel zur Drehachse (23) erkennbar ist.

11. Absperrventil nach einem der vorhergehenden Ansprüche, **dadurch gekennzeichnet, dass** eine Rutschkupplung, Überschnappeinrichtung oder eine Sollbruchstelle vorgesehen sind, so dass im Falle eines Versagens der Zustandsanzeige der Ventil geschlossen werden kann.

12. Absperrventil nach Anspruch 6, **dadurch gekennzeichnet, dass** die Winkelbereiche der Umfangserstreckungen von Sichtfenster (5), Geschlossenmarkierung (31) und Anschlagteil (24) etwa gleich groß sind.

13. Absperrventil nach Anspruch 12, **dadurch gekennzeichnet, dass** der Winkelbereich der Umfangserstreckungen zwischen 45 Grad und 135 Grad liegt.

## Claims

1. A shut-off valve with status display, comprising an actuating element (9) which is rotatable about a rotational axis (23) and provided with a viewing window (5) on an upper side (11) thereof and by the rotational actuation of which a valve (6) is movable between an open and a closed position, and which is in operative communication with a status display for displaying the valve position, the status display comprising a towing element (15) which is rotatably supported about the rotational axis (23) and which cooperates with the actuating element (9) in such a manner that an open marking (21) for the open position or a closed marking for the closed position of the valve (6) is visible through the viewing window (5), **characterized in that** the towing element (15) comprises the open marking (21) and is rotatable in a plane - viewed in viewing direction through the viewing window - in front of the closed marking (31), the towing element (15) and the actuating element (9) cooperating via a detachable connection consisting of entrainer (30) and matching recess (20) in such a manner that the towing element (15) is towed upon opening and closing of the valve (6) with the actuating element (9) reversingly over the closed marking and from there again into its initial position, so that the towing element (15) in the closed position of the valve allows viewing through the viewing window (5) on the closed marking (31), and in the open position of the valve prevents viewing through the viewing window (5) on the closed marking (31) by a cover.

2. The shut-off valve according to claim 1, **characterized in that** the towing element (15) is rotatable between a front stop (22) and a rear stop (22) under action of the actuating element (9).

3. The shut-off valve according to claim 2, **characterized in that** the rotation angle between front and rear stop (22) is at least 270 degrees.

4. The shut-off valve according to claim 2 or 3, **characterized in that** the rotation angle between front and rear stop (22) is at least as great as a circular section angle (x) which defines the width of the closed marking (31).

5. The shut-off valve according to claim 4, **characterized in that** the towing element (15) is provided with a circular ring which carries the open marking (21) and which is interrupted by a section (18) which is at least as great as the circular section angle (x).

6. The shut-off valve according to claim 5, **characterized in that** the circular ring comprises a sleeve-like attachment (17) which is provided with a stop member (24) and which extends into the inner bore (14) of an auxiliary cylinder (13) in which the front stop (22) and the rear stop (22) of the rotational movement of the towing element (15) are formed.

7. The shut-off valve according to claim 6, **characterized in that** the auxiliary cylinder (13) carries the closed marking (31) on its face facing the towing element (15).

8. The shut-off valve according to any one of the preceding claims, **characterized in that** the actuating element (9) comprises an upper member (28) in which the viewing window (5) is formed, and which is provided with a pin (27) which is in rotating union with the valve (6).

9. The shut-off valve according to claim 1, **characterized in that** the towing element (15) is pressed by means of a pressure element (26) against the actuating element (9), and that the towing element (15) and the actuating element (9) can be brought out of engagement against the contact pressing force of the pressure element (26).

10. The shut-off valve according to any one of the preceding claims, **characterized in that** the status display is arranged such that it is visible with the viewing direction being in parallel with the rotational axis (23).

11. The shut-off valve according to any one of the preceding claims, **characterized in that** a sliding clutch, snap-over means or a predetermined breaking point are provided, so that the valve can be closed in case of failure of the status display.

12. The shut-off valve according to claim 6, **characterized in that** the angular ranges of the circumferential extensions of viewing window (5), closed marking (31) and stop member (24) are about the same.

13. The shut-off valve according to claim 12, **characterized in that** the angular range of the circumferential extensions is between 45 degrees and 135 degrees.

## Revendications

1. Soupape d'arrêt avec affichage d'état, comprenant un élément d'actionnement (9) rotatif autour d'un axe de rotation (23) et muni d'un hublot (5) sur une face supérieure (11) de ce dernier, par l'actionnement rotative duquel une vanne (6) est mobile entre une position ouverte et une position fermée, et qui est connecté activement à un affichage d'état pour indiquer la position de soupape, l'affichage d'état comprenant un élément d'entraînement (15) logé rotatif autour d'un axe de rotation (23) qui est relié activement à l'élément d'actionnement (9) de sorte qu'une marque d'ouverture (21) est détectable par le hublot (5) pour la position ouverte ou une marque de fermeture pour la position fermée de la soupape (6), **caractérisée en ce que** l'élément d'entraînement (15) présente la marque d'ouverture (21) et est rotatif dans un plan - dans le sens du regard à travers le hublot - devant la marque de fermeture (31), l'élément d'entraînement (15) et l'élément d'actionnement (9) coopérant par une connexion amovible composée d'un ergot d'entrainement (30) et d'un évidement correspondant (20) de sorte que l'élément d'entraînement (15), à l'ouverture et à la fermeture de la soupape (6), est entraîné avec l'élément d'actionnement (9) en sens inverse par le marquage de fermeture et de là est ramené dans sa position de départ, de sorte l'élément d'entraînement (15) libère, lors de la position de fermeture de soupape, la vue à travers le hublot (5) sur la marque de fermeture (31), et en position d'ouverture de soupape, la vue est entravée par le hublot (5) sur la marque de fermeture (31) par un recouvrement.

2. Soupape d'arrêt selon la revendication 1, **caractérisée en ce que** l'élément d'entraînement (15) est rotatif entre une butée avant (22) et une butée arrière (22) sous l'action de l'élément d'actionnement (9).

3. Soupape d'arrêt selon la revendication 2, **caractérisée en ce que** l'angle de rotation entre la butée avant et arrière (22) est au moins de 270 dégrées.

4. Soupape d'arrêt selon la revendication 2 ou 3, **caractérisée en ce que** l'angle de rotation entre la butée avant et arrière (22) est au moins égal à un angle de secteur (x) qui définit la largeur de la marque de fermeture (31).

5. Soupape d'arrêt selon la revendication 4, **caractérisée en ce que** l'élément d'entraînement (15) est muni d'un anneau de cercle portant la marque d'ouverture (21) qui est interrompu par un secteur (18) au moins égal à l'angle de secteur (x).

6. Soupape d'arrêt selon la revendication 5, **caractérisée en ce que** l'anneau de cercle présente un épaulement (17) en forme de manchon muni d'une partie de butée (24) qui s'étend dans le perçage interne (14) d'un cylindre auxiliaire (13), perçage dans lequel sont réalisées la butée avant (22) et la butée arrière (22) du mouvement de rotation de l'élément d'entraînement (15).

7. Soupape d'arrêt selon la revendication 6, **caractérisée en ce que** le cylindre auxiliaire (13) porte sur sa face avant opposée à l'élément d'entraînement (15) la marque de fermeture (31).

8. Soupape d'arrêt selon l'une des revendications précédentes, **caractérisée en ce que** l'élément d'actionnement (9) présente une partie supérieure (28) dans laquelle est réalisé le hublot (5) et qui est munie d'un ergot (27) qui est relié en rotation avec la soupape (6).

9. Soupape d'arrêt selon la revendication 1, **caractérisée en ce que** l'élément d'entraînement (15) est pressé au moyen d'un élément de pression (26) contre l'élément d'actionnement (9) et **en ce que** l'élément d'entraînement (15) et l'élément d'actionnement (9) peuvent être désengagés à l'encontre de la force de pression de l'élément de pression (26).

10. Soupape d'arrêt selon l'une des revendications précédentes, **caractérisée en ce que** l'affichage d'état est disposé de sorte qu'il est reconnaissable avec la direction du regard parallèlement à l'axe de rotation (23).

11. Soupape d'arrêt selon l'une des revendications précédentes, **caractérisée en ce qu'**il est prévu un accouplement à friction, un dispositif d'encliquetage ou une position de rupture théorique de sorte que dans le cas d'une défaillance de l'affichage d'état la soupape peut être fermée.

12. Soupape d'arrêt selon la revendication 6, **caractérisée en ce que** les zones angulaires des extensions périphériques du hublot (5), de la marque de fermeture (31) et de la partie de butée (24) sont approximativement de dimensions identiques.

13. Soupape d'arrêt selon la revendication 12, **caractérisée en ce que** la zone angulaire des extensions périphériques est comprise entre 45 dégrées et 135 dégrées.
